(19) Europäisches Patentamt / European Patent Office / Office européen des brevets

(11) **EP 3 892 838 B1**

(12) **EUROPEAN PATENT SPECIFICATION**

(45) Date of publication and mention
of the grant of the patent:
**03.07.2024   Bulletin 2024/27**

(21) Application number: **20168702.7**

(22) Date of filing: **08.04.2020**

(51) International Patent Classification (IPC):
**F01N 3/20** $^{(2006.01)}$

(52) Cooperative Patent Classification (CPC):
**F01N 3/2066;** F01N 2560/026; F01N 2560/14;
F01N 2610/02; F01N 2900/00; F01N 2900/0404;
F01N 2900/0416; F01N 2900/1616; Y02A 50/20;
Y02T 10/12

(54) **A METHOD FOR DETECTING AMMONIA SLIPS DOWNSTREAM OF AN AFTER TREATMENT SYSTEM FOR EXHAUST GASES OF A MOTOR VEHICLE**

VERFAHREN ZUM ERKENNEN EINES AMMONIADURCHBRUCHS STROMABWÄRTS EINES ABGASNACHBEHANDLUNGSSYSTEMS EINES KRAFTFAHRZEUGS

PROCEDE DE DETECTION DE GLISSEMENTS D'AMMONIAC EN AVAL D'UN SYSTEME DE POST-TRAITEMENT DES GAZ D'ECHAPPEMENT D'UN VEHICULE AUTOMOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.10.2021   Bulletin 2021/41**

(73) Proprietor: **Stellantis Europe S.p.A.
10135 Torino, (TO) (IT)**

(72) Inventors:
• **GANCI, Mario**
**I-10135 Torino (IT)**
• **FORTUNATO, Vincenzo**
**I-10135 Torino (IT)**
• **RUSTICI, Giorgio**
**I-10135 Torino (IT)**
• **GAROMBO, Danilo**
**I-10135 Torino (IT)**

(74) Representative: **De Bonis, Paolo
Buzzi, Notaro & Antonielli d'Oulx S.p.A.
Corso Vittorio Emanuele II, 6
10123 Torino (IT)**

(56) References cited:
DE-A1-102007 044 611     DE-A1-102009 058 089
US-A1- 2015 218 991     US-A1- 2019 162 094

**Description**

Field of the invention

The present invention relates to systems for after-treatment of exhaust gases of a motor vehicle, and in particular to systems for abating nitrogen oxides ($NO_x$). The invention has been developed with specific reference to after-treatment systems based upon the use of a precursor of ammonia, namely urea. Background documents in this technical field include, i.a., DE 10 2009 058089 A1, US 2015/218991 A1, DE 10 2007 044611 A1, and US 2019/162094 A1.

Prior art and general technical problem

Respect of the most recent thresholds of emission of nitrogen oxides envisaged by current and future standards renders by now imperative the use of an after-treatment system for exhaust gases of a motor vehicle equipped with a stage for abating nitrogen oxides ($NO_x$) in a mixture of products comprising gaseous nitrogen, water, and small amounts of $CO_2$.

The most widespread system is currently referred to as SCR (Selective-Catalytic-Reduction) and exploits a reducing agent for the conversion of nitrogen oxides.

As is known, the reducing agent used in SCR systems is ammonia, which, however, cannot be stored as such on board the vehicle. To make up for this, a precursor of ammonia is used, corresponding to urea (of an automotive-grade type).

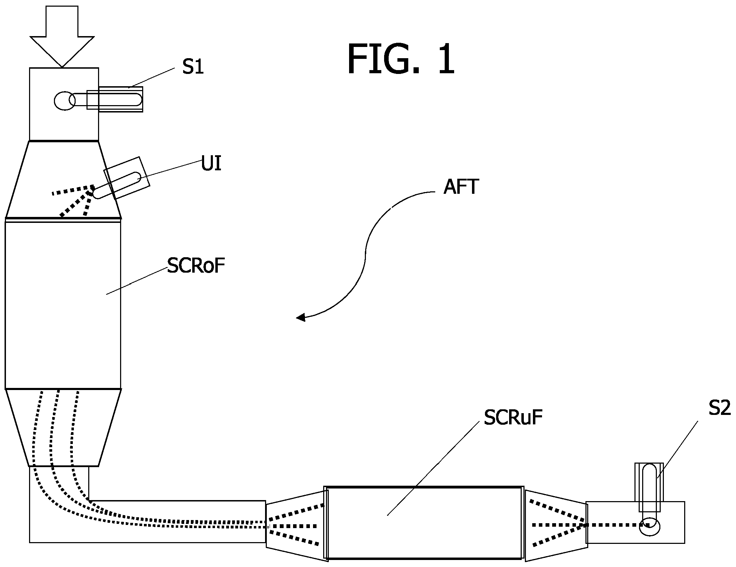

Some systems may comprise a dual nitrogen-oxide reduction stage, which includes a first selective-catalytic-reduction element, the SCRoF, in an over-floor position (typically in the engine compartment of the vehicle), and a second selective-catalytic-reduction element, the SCRuF, in an under-floor position. A scheme of this solution is illustrated in Figure 1, where the reference AFT denotes as a whole the exhaust-gas after-treatment line of the motor vehicle.

Set upstream of the first selective-catalytic-reduction element SCRoF is a first nitrogen-oxide-concentration sensor S1, and immediately downstream of the latter, but once again set upstream of the element SCRoF, is a urea injector UI. The injector UI dispenses controlled amounts of an aqueous solution of urea within the first selective-catalytic-reduction element SCRoF, where the urea is converted into ammonia. Ammonia accumulates within the first selective-catalytic-reduction element SCRoF up to saturation thereof, after which it migrates towards the second selective-catalytic-reduction element SCRuF, once again filling it up to saturation. Set downstream of the second selective-catalytic-reduction element SCRuF is a second nitrogen-oxide-concentration sensor S2.

Ideally, calibration of the after-treatment system should alone be sufficient not to have leakages of ammonia at the exhaust, a decidedly undesirable circumstance. However, during transient manoeuvres, or during interrupted events of regeneration of an anti-particulate filter, or as a result of particular driving profiles (e.g., the so-called door-to-door profile), minor ammonia slips may occur, with the result of a conditioning of reading of the sensor S2 downstream of the selective-catalytic-reduction element SCRuF. The sensor S2 is not in fact able to discriminate, within the nitrogen-oxide-concentration datum detected, which fraction is to be put down to nitrogen oxides that remain in the treated exhaust-gas stream, and whether and which fraction is to be put down to an ammonia slip (in other words, the value of nitrogen detected at the exhaust - in the absence of other data - may derive either from an excess of nitrogen oxides due to low efficiency of the selective-catalytic-reduction element or from an ammonia slip). All this is likely to trigger a positive feedback that rapidly leads to an increase of ammonia slips. Since the system referred to above is not able to make the above discrimination, a reading showing high concentrations of nitrogen oxides at the exhaust will be interpreted as a reduction of the efficiency of abatement of the nitrogen oxides themselves by the selective-catalytic-reduction element or elements, with consequent increase in the amount of urea introduced into the system. As a result, the excess urea and ammonia generated thereby have the sole result of faster saturation of the two selective-catalytic-reduction elements SCRoF and SCRuF, without a real increase in the efficiency of conversion thereof, but with an appreciable increase in the amount of ammonia that leaves the exhaust in so far as it is prevented from reacting in an environment that is already saturated.

Object of the invention

The object of the present invention is to overcome the technical problems mentioned previously. In particular, with reference to an exhaust-gas after-treatment system of an SCR type, the aim is to discriminate, downstream of the one or more selective-catalytic-reduction elements, the residual fraction of nitrogen oxides from the fraction of ammonia, without envisaging a specific ammonia-concentration sensor, and without requiring operations that are excessively burdensome from a computational standpoint.

Summary of the invention

The object of the present invention is achieved by a method having the features of Claim 1.

Brief description of the figures

The invention will now be described with reference to the annexed figures, which provided purely by way of non-limiting example and wherein:

- Figure 1 is a schematic exemplary representation of an after-treatment system for exhaust gases of a motor vehicle with nitrogen-oxide selective-catalytic-reduction elements;
- Figure 2 comprises a first portion 2A representing a frequency-response diagram (amplitude-frequency) corresponding to a first operating condition of an after-treatment system for exhaust gases of a motor vehicle with nitrogen-oxide selective-catalytic-reduction elements, and a second portion 2B representing a frequency-response diagram (amplitude-frequency) corresponding to a second operating condition of an after-treatment system for exhaust gases of a motor vehicle with nitrogen-oxide selective-catalytic-reduction elements;
- Figure 3 comprises a first portion 3A and a second portion 3B corresponding to the portions 2A, 2B, but illustrating processing of the data according to the invention;
- Figure 4 comprises portions A, B, C, D that represent by way of example types of exhaust-gas after-treatment systems with a frequency response similar to that of Figures 2 and 3, and to which the method according to the invention can be applied;

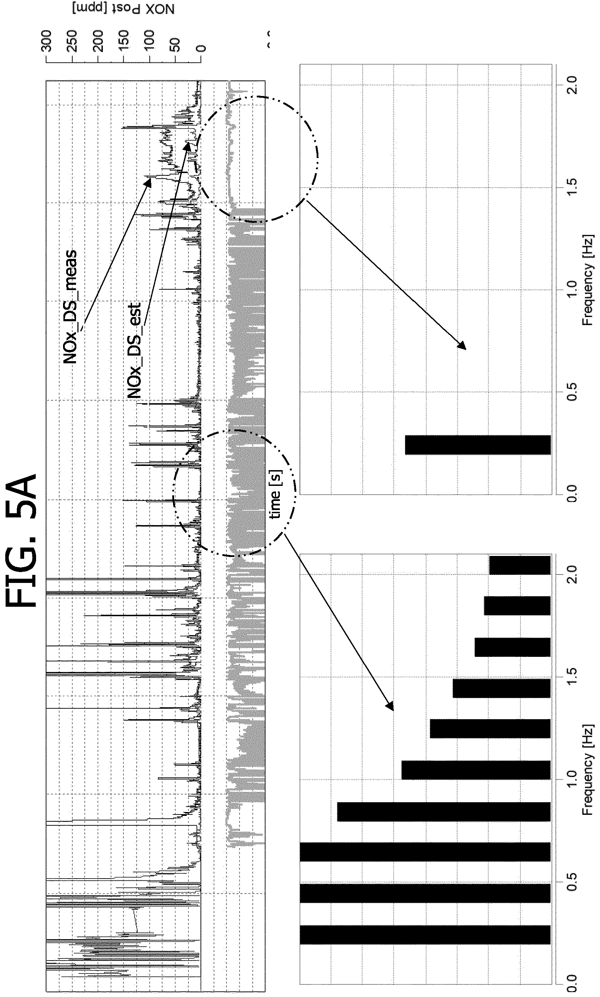

- Figure 5A shows the time plot of a reference function of the system used in the method according to the invention, while Figures 5B and 5C illustrate the respective frequency-response diagrams in the operating conditions referred to in Figures 2A, 3A and 2B, 3B;
- Figure 6 is a block diagram of the method according to the invention, while Figure 7 provides a representation thereof in the form of a flowchart;
- Figure 8A illustrates a correlation between the evolutions in time of an ammonia-concentration signal, a nitrogen-oxide-concentration signal, and the reference function in an exhaust-gas after-treatment system of the type illustrated in Figures 1 and 7; and
- Figure 8B is a graphic illustration of the processing stages of the reference function according to the method of the invention.

Detailed description

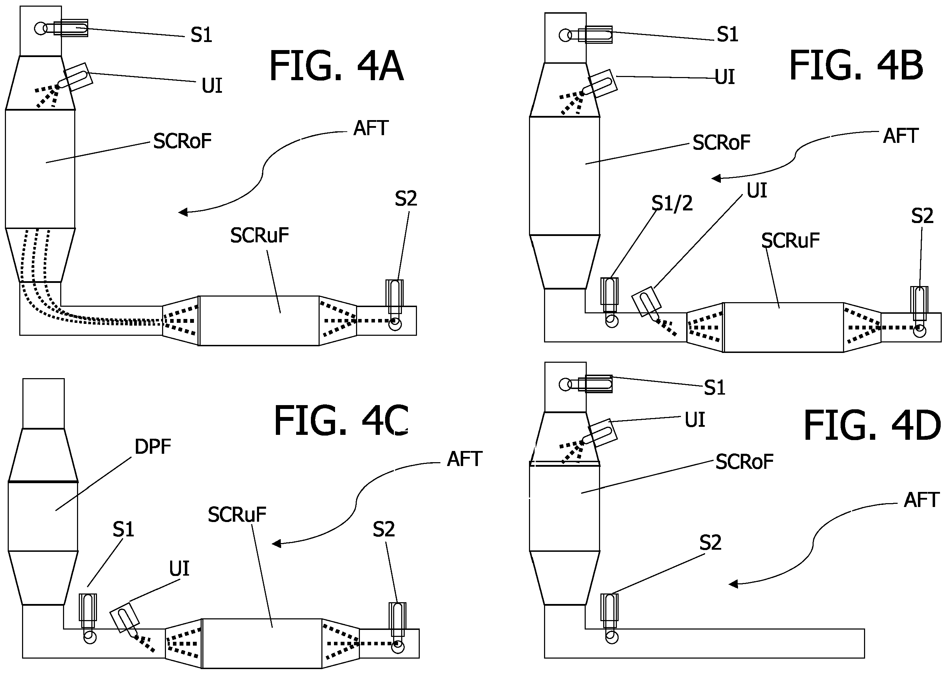

With reference to the diagram of Figure 1, and - by extension - to the diagrams of Figure 4, the aim underlying the method according to the invention is use of the sensor equipment already on board the vehicle and the after-treatment line so as to provide a virtual ammonia sensor at the exhaust.

As has been said, a nitrogen-oxide sensor is not able to discriminate residual nitrogen oxides from ammonia, but this does not prevent it from being insensitive to the occurrence of one or the other circumstance. The information that enables the above discrimination is to some extent inherent in the signal supplied by the sensor S2, but cannot be immediately exploited if the raw signal generated by the sensor S2 itself is assumed as reference for the analysis.

As is known, any signal may be made up of a combination of harmonics at different frequencies, where, clearly, the higher the number of harmonics that intervene in the decomposition, the better the approximation of the signal itself. The operation of decomposition is carried out by resorting to the Fourier transform in discrete form and to the most common algorithm for implementation thereof: the Fast Fourier Transform (FFT).

The inventors have, however, noted how implementation alone of the Fourier transform on the raw signal coming from the sensor S2 downstream is not effective for the purposes of discrimination of the two species of interest ($NO_x$ and ammonia).

A first step of the method according to the invention comprises definition of a reference function in the time domain that links the temporal nitrogen-oxide-concentration signals generated in the system, namely the temporal nitrogen-oxide-concentration signals coming from the sensors S1 and S2.

According to the invention, this reference function is designated by the reference $NOx_{FR}(t)$ and is expressed by:

$$NOx_{FR}(t) = [NOx_{DSmeasd}(t) - K \cdot NOx_{USmeasd}(t)]/NOx_{DSmeasd}(t)$$

where:

NOx$_{DSmeasd}$(t) is the temporal signal coming from the nitrogen-oxide sensor downstream - sensor S2;
NOx$_{USmeasd}$(t) is the temporal signal coming from the nitrogen-oxide sensor upstream - sensor S1; and
K is the calibration coefficient, which may be either constant or variable.

It should be noted that, in the framework of the definition mentioned above, the terms "upstream" and "downstream" refer to the position of a pair of sensors with respect to the selective-catalytic-reduction elements for treatment of nitrogen oxides (in what follows, for brevity, SCR elements, where not otherwise specified) of the after-treatment system AFT, without necessarily meaning that only two nitrogen-oxide-concentration sensors have to be present in the entire after-treatment system AFT, and without necessarily meaning that the number of SCR elements must be fixed. Consider, for example, the diagram of Figure 4B (that of Figure 4A is identical to the case of Figure 1), where the after-treatment system comprises two SCR elements designated by the references SCRoF and SCRuF, each associated to a respective pair of nitrogen-oxide-concentration sensors and where a sensor S1/2 set between the two elements SCRoF and SCRuF is a downstream sensor for the element SCRoF, whereas it is an upstream sensor for the element SCRuF. In greater detail, in the diagram of Figure 4B, the sensor S1 is upstream of the element SCRoF, the sensor S2 is downstream of the element SCRuF, which is in turn downstream of the element SCRoF, whereas the sensor S1/2 is set between the two elements SCRoF and SCRuF. An injector UI is set upstream of each of the sensors S1, S1/2.

In this embodiment, a transfer function is defined for each pair of sensors (which is the general criterion for the method according to the invention). In particular, two reference functions NOx$_{FR1}$(t) and NOx$_{FR2}$(t) are defined, the first for the pair of sensors S1 and S1/2, and the second for the pair of sensors S1/2 and S2. The functions have an identical form, but differ in the values and/or in the type (constant or variable) of the calibration coefficient K, in this case K1 for the first function and K2 for the second. Hence, the following applies:

$$NOx_{FR1}(t) = [NOx_{S1/2measd}(t) - K1 \cdot NOx_{S1measd}(t)]/NOx_{S1/2measd}(t)$$

$$NOx_{FR2}(t) = [NOx_{S2measd}(t) - K2 \cdot NOx_{S1/2measd}(t)]/NOx_{S2measd}(t)$$

For the purposes of the present invention, moreover admissible for the reference function NOx$_{FR2}$(t) are forms of the type:

$$NOx_{FR2}(t) = [NOx_{S2measd}(t) - K2 \cdot NOx_{S1measd}(t)]/NOx_{S2measd}(t)$$

As will be described shortly, also the latter forms can be used for the subsequent frequency-filtering operations.

It should be noted that the temporal signals NOx$_{DSmeasd}$(t) and NOx$_{USmeasd}$(t) are here replaced by the signals coming from the sensors that - within each pair - are in a position upstream and downstream; namely,

element SCRoF: NOx$_{DSmeasd}$(t) = NOx$_{S1/2measd}$(t), NOx$_{USmeasd}$(t) = NOx$_{S1measd}$(t)

element SCRuF: NOx$_{DSmeasd}$(t) = NOx$_{S2measd}$(t), NOx$_{USmeasd}$(t) = NOx$_{S1/2measd}$(t).

Finally, it is to be noted that the value of the threshold C may be specific for each function, i.e., a value C1 for the function NOx$_{FR1}$(t) (hence referring to the condition existing downstream of the first SCR element), and a value C2 for the function NOx$_{FR2}$(t) (referring to the condition existing downstream of the entire after-treatment line). The values C1 and C2 may hence be different or, in limit cases, the same.

It is hence possible to identify some typical situations:

- threshold C1 not exceeded, threshold C2 not exceeded: no ammonia slips from any of the SCR elements constituting the after-treatment line are found;
- threshold C1 exceeded, threshold C2 not exceeded: an ammonia slip from the element SCRoF is occurring, whereas the element SCRuF does not present any slips; in this step, the level of storage of ammonia of the second element tends to increase on account of the ammonia slip from the element SCRoF; via the method according to the invention it is possible to keep track of this contribution, which otherwise would not be measurable;

- threshold C1 not exceeded, threshold C2 exceeded: the element SCRoF does not present any slips, whereas there is an ammonia slip from the element SCRuF; this condition identifies the presence of ammonia downstream of the after-treatment system (hence, in the environment), but not between the two SCR elements, which leads to the conclusion that the element SCRuF is saturated; the levels of intervention basically regard a reduction in the amount of urea;
- threshold C1 exceeded, threshold C2 exceeded: the element SCRoF is saturated, and the element SCRuF is saturated; overstepping of both of the thresholds indicates the presence of ammonia downstream of both of the SCR elements present on the after-treatment line; this situation may arise following, for example, upon a thermal transient, which has suddenly varied the thermal state of the after-treatment system, bringing it to an overall reduction of the ammonia storage capacity.

In the diagram of Figure 4C, the after-treatment system comprises a particulate trap DPF set upstream of the SCR element designated as SCRuF. In this case, there are just two nitrogen-oxide-concentration sensors, which correspond to the sensors S1, S2 that are arranged upstream and downstream, respectively, of the element SCRuF. The injector UI is set downstream of the sensor S1.

Once again in the diagram of Figure 4D just one SCR element is envisaged, designated by the reference SCRoF: there are two nitrogen-oxide-concentration sensors, S1, which is located upstream, and S2, which is located downstream, of the element SCRoF, while the injector UI is regularly set downstream of the sensor S1.

Proceeding to a description of the reference function $NOx_{FR}(t)$ in the frequency domain by means of Fourier transform, there is noted a frequency response having a characteristic shape both in the case where no ammonia slips occur, but only residual emissions of nitrogen oxides, and in the case where ammonia slips mixed with nitrogen oxides occur.

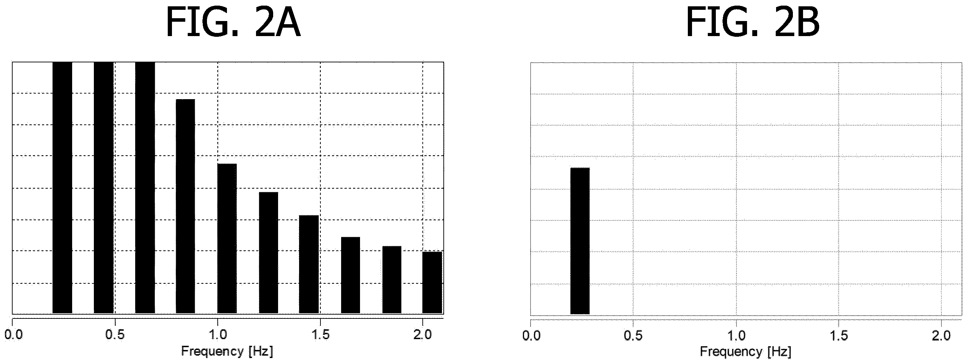

Figure 2A represents the frequency response of the function $NOx_{FR}(t)$ in the case where downstream of the after-treatment line AFT essentially residual nitrogen oxides are present, basically without ammonia slips. The diagram highlights the presence of harmonics with significant amplitudes both in the high-frequency domain and in the low-frequency domain.

Figure 2B represents the frequency response of the function $NOx_{FR}(t)$ in the case where downstream of the after-treatment line there is present ammonia as a result of a slip from the after-treatment system AFT. The diagram highlights the presence of harmonics with significant amplitudes only in the low-frequency domain, whereas the amplitudes in the high-frequency domain have negligible values.

At a theoretical level, on data corresponding to the diagrams of Figures 2A, 2B a processing operation is possible consisting in identification of two representative harmonics, one for the low-frequency range, the other for the high-frequency range, and in determination of a characteristic amplitude ratio LF/HF thus defined, where:

LF is the amplitude of a characteristic low-frequency harmonic; and

HF is the amplitude of a characteristic high-frequency harmonic.

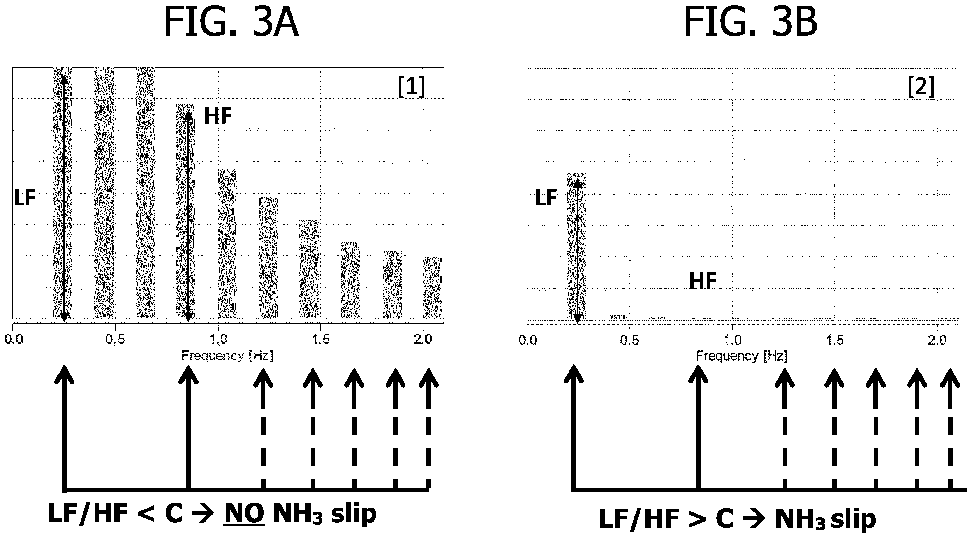

According to the invention, the amplitude ratio LF/HF can then be compared with a threshold value C to discriminate the two conditions - no ammonia slip/ammonia slip - on the basis of the threshold value itself. In particular, with reference to Figures 3A and 3B, if the ratio LF/HF is lower than the threshold C, no ammonia slips at the exhaust are identified. The reason for this is that a ratio lower than the threshold is indicative of substantially comparable amplitudes of the characteristic harmonics.

Instead, according to the invention, when the ratio LF/HF is higher than the threshold C, the presence of ammonia slips at the exhaust is identified. The reason for this is that a ratio higher than the threshold is indicative of a value of amplitude of the low-frequency reference harmonic predominant over the value of amplitude of the high-frequency reference harmonic.

As regards the threshold value C, this can be calibrated, for example, as a function of the position of the sensors S1, S2 and optionally S1/2, of the arrangement of the exhaust line and of the various after-treatment systems or subsystems, and of the type of sensor used.

However, the inventors have noted how the computational cost of implementation of an FFT algorithm in an engine control unit of a motor vehicle is not sustainable. The aim is hence to avoid recourse to the direct-transform operation (for example, by means of the FFT algorithm) in order to prevent computational overloads for the electronic control unit of the engine.

For this reason, a second step of the method according to the invention comprises processing the reference function $NOx_{FR}(t)$ by means of frequency filtering so as to clear the temporal signal corresponding to the reference function $NOx_{FR}(t)$ of the frequencies deemed undesirable for the purposes of detection of the ammonia slips. As discussed previously in relation to Figures 2 and 3, in effect it is not necessary to investigate the entire frequency range to obtain information representative of the occurrence of ammonia slips and to discriminate this condition from acceptable operating conditions.

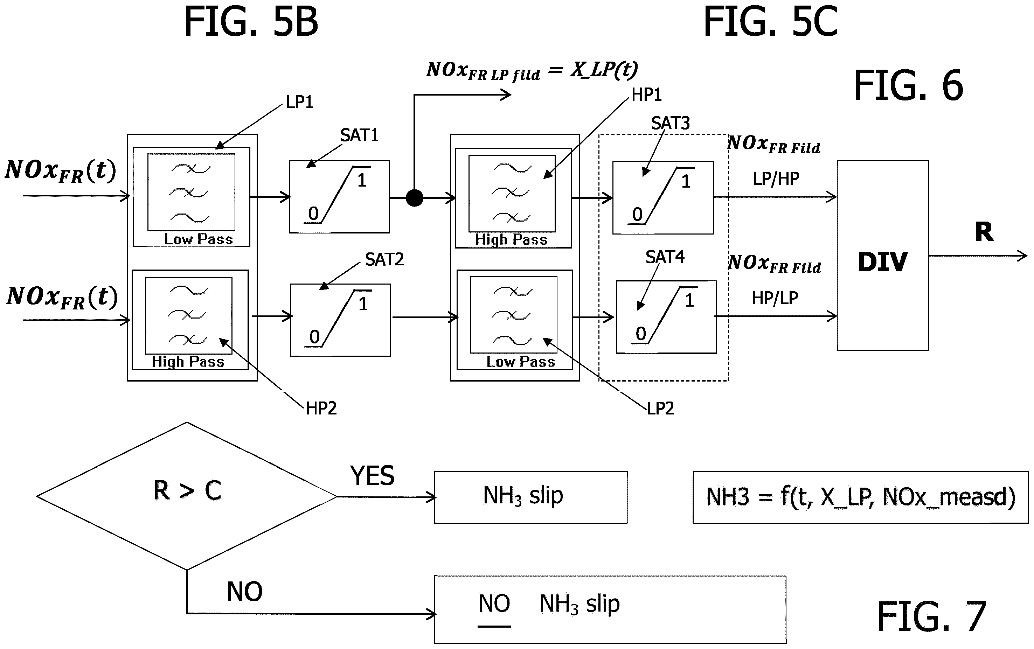

The operation of frequency filtering of the function $NOx_{FR}(t)$ is performed, in a preferred embodiment of the method according to the invention, on the basis of the diagram of Figure 6. The aim of the method according to the invention is to extract, without resorting to the Fourier transform, frequency bands reasonably approximating the frequencies of the representative harmonics LF and HF described previously.

The reference function $NOx_{FR}(t)$ is processed in a parallel way on two filtering lines and through filtering sequences. On a first processing line, for filtering the signal $NOx_{FR}(t)$, this is processed by a first low-pass filter LP1 and a first high-pass filter HP1 isolating a frequency band representative of the low-frequency harmonics, with values of up to 0.1 Hz, whereas, on a second processing line, the signal $NOx_{FR}(t)$ is processed by a second high-pass filter HP2 and by a second low-pass filter LP2, isolating a frequency band representative of the high-frequency harmonics, with values of the order of 0.1 Hz and an upper limit of frequency set at 0.5 Hz.

Preferably, downstream of the filters LP1 and HP2, each processing line comprises a saturator stage SAT1, SAT2, which imposes on the filtered signal a value equal to 0 in the case where it has an amplitude lower than 0, and a value equal to 1 in the case where it has an amplitude greater than 1. Optionally, a further saturator stage SAT3, SAT4 is set downstream of the filters HP1 and LP2. The latter stage is not in any case strictly necessary (the first stage SAT1, SAT2 would be sufficient), but guarantees a better cleanness and quality of the output signal, preventing - downstream of the procedure - the ratio between signals from assuming indeterminate values of the type 0/0, $\infty/\infty$, value/0.

The cut-off frequencies of the filters LP1 and HP1 are comprised, by way of example, between 0.01 Hz and 0.05 Hz, preferably 0.05 Hz, for the filter LP1, and between 0 Hz and 0.01 Hz, preferably 0.002 Hz, for the filter HP1.

The cut-off frequencies of the filters LP2 and HP2 are comprised, by way of example, between 0.4 Hz and 1 Hz, preferably 0.5 Hz, for the filter LP2, and between 0.1 Hz and 0.5 Hz, preferably 0.4 Hz, for the filter HP2.

It should further be noted that the cut-off frequencies of the filters LP1, HP1, LP2, HP2 also depend upon the sampling frequency of the signals coming from the sensors S1, S2, S1/2, etc.

In other embodiments, it is possible to replace the filtering sequences LP1-HP1 and HP2-LP2 with respective band-pass filters (one for the sequence LP1-HP1, and one for the sequence HP2-LP2). In general, filtering solutions may be adopted, aimed at isolating frequency ranges of interest. Preferably, for the application considered, second-order or higher-order filters are used, and it is moreover possible to resort to the use of filters of a calibratable order.

In other words, and in summary, the method further comprises:

- subjecting the reference function $NOx_{FR}(t)$ to a first filtering (sequence LP1, HP1 or first band-pass filter) to obtain a first temporal signal $NOx_{FR\ Fild}$ LP/HP, which represents a component of the reference function having a first frequency range; and
- subjecting the reference function $NOx_{FR}(t)$ to a second filtering (sequence HP2, LP2 or second band-pass filter) to obtain a second temporal signal $NOx_{FR\ Fild}$ HP/LP, which represents a component of the reference function having a second frequency range, in which the second frequency range (representative of the high-frequency range HF) has values higher than the first frequency range (representative of the low-frequency range LF).

The result of processing in each of the two filtering sequences converges in a single functional block DIV, where the value of an amplitude ratio R representative of the ratio LF/HF discussed previously is determined. With reference to the notation of Figure 6, the resulting signal downstream of the first processing line is designated by the reference $NOx_{FR\ Fild}$ LP/HP, whereas the resulting signal downstream of the second processing line is designated by the reference $NOx_{FR\ Fild}$ HP/LP, where the suffix made up of the references HP and LP indicates the time sequence of processing by the low-pass filter (LP) and the high-pass filter (HP).

With reference to Figure 7, if the value of the amplitude ratio R is higher than the threshold C for a pre-set number of processing cycles (by way of example, without this constituting a necessary condition, the pre-set number of cycles is equal to 250 consecutive cycles), it is possible to ascertain the presence of ammonia slips at the exhaust. The amount of the ammonia slip at the exhaust is a function of time, of the signal $NOx_{FR}(t)$ purged of the high-frequency harmonics $NOx_{FRLP,fild}$, in particular of the amplitude thereof, which can be expressed as $X\_LP(t)$, and of the concentration of $NO_x$ measured at the exhaust by the sensor S2 (NOx_measd, corresponding to $NOx_{DSmeasd}(t)$ in the notation adopted here). This amplitude is used as coefficient (which, in the case of presence of ammonia at the exhaust, is comprised between 0 and 1 owing to the processing through the saturator stage SAT 1) for determining the proportion of ammonia within the signal of the sensor NOx and obtaining, according to the method of the invention, a quantitative indication of the ammonia at the exhaust additional to the simple information of presence. In a preferred embodiment, the amount of ammonia at the exhaust NH3 (preferably expressed in ppm) may be estimated by means of the product $X\_LP(t) \cdot NOx\_measd$, but in alternative embodiments it is possible to use a form of the type $X\_LP(t) \cdot NOx\_measd \cdot Fac$, where Fac is a mapped multiplicative factor (or corrective coefficient) that can correct the raw value in given conditions. It is possible to use different corrective coefficients as a function of $X\_LP(t)$, for example maps of coefficients defined as a function of X_LP(t), of the temperature of the exhaust gases, or of the flow rate of the exhaust gases (the latter factor is preferred, albeit not necessarily the only one), and it is moreover possible to use a map of coefficients that are a function of a modelled ageing coefficient of the SCR system so as to introduce corrections that will take into account ageing of the SCR elements and/or ageing of the nitrogen-oxide-concentration sensors.

Consequently, the electronic control unit of the engine will send a signal to the urea injector UI (or injectors UI, if more than one is present) aimed at reducing the flow rate of urea introduced into the exhaust-gas after-treatment system, namely upstream of the SCR elements.

It should further be noted that, when - with the succession of the processing cycles - the value of the amplitude ratio R drops below the threshold value C, the method envisages waiting a time interval $t_R$ (or hysteresis time) before sending to the engine electronic control unit a signal indicating that the ammonia slip at the exhaust has ceased. This measure is implemented to prevent the so-called toggling effect between the two conditions associated to the relation between the amplitude ratio R and the threshold C. The time interval $t_R$, which by way of example is comprised between 10 and 20 s, preferably 15 s, is generally different from, in particular shorter than, the time interval covered by the successive processing cycles where there arises the condition R > C, on the basis of which the condition of presence of the ammonia slips is determined.

If R becomes less than C, a counter of the hysteresis time $t_R$, (e.g., 15 s) is started; if, during counting of the time and before the calibrated threshold for the time $t_R$ is reached, the ratio R returns to being greater than C even just for an instant, the counter is reset and the condition of exceeding of the threshold remains active in the system, hence continuing to confirming the presence of ammonia $NH_3$ at the exhaust. Consequently, the engine control unit will send a signal to the urea injector UI (or injectors UI, if more than one is present) aimed at maintaining the flow rate of urea introduced into the exhaust-gas after-treatment system, namely upstream of the SCR elements, to the current value. It is further possible to control a reduction of the flow rate of urea if the circumstances were to so require, or again it is possible to govern an increase of the flow rate of urea injected to compensate for possible drops in efficiency of the SCR elements since, thanks to the method according to the invention, it is possible to discriminate between the two conditions (ammonia present/ammonia not present), an operation that is not possible with systems of a known type.

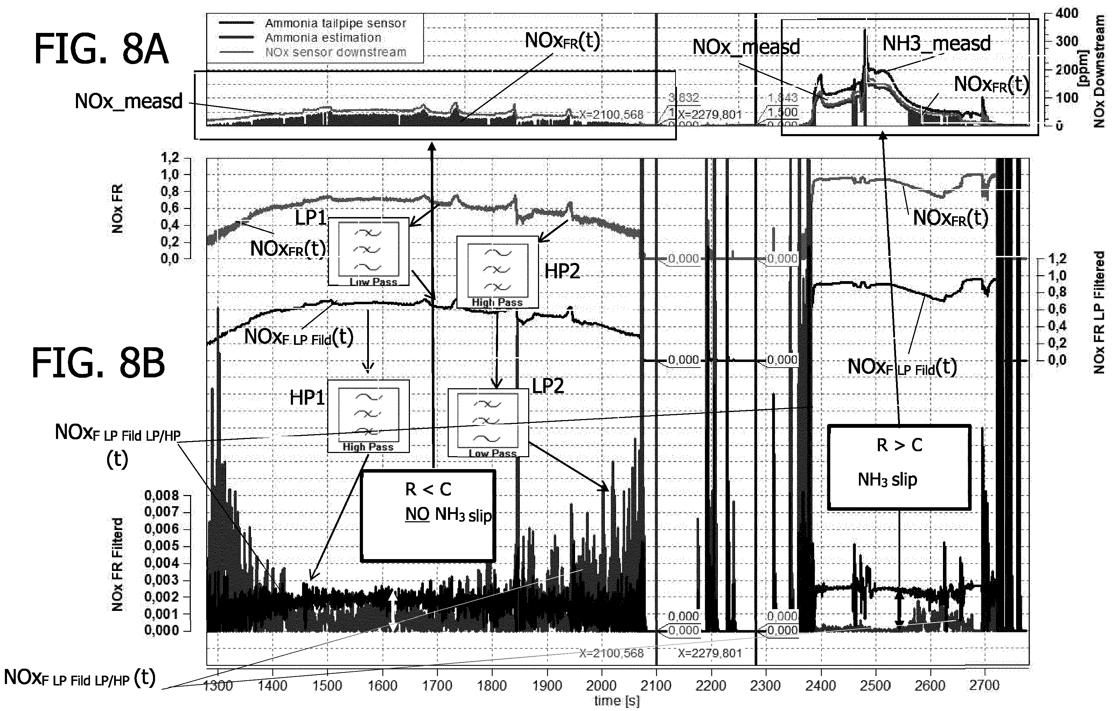

Figure 8A represents a time plot that shows the correlation between the ammonia-concentration signal detected experimentally downstream of the after-treatment line NH3_measd, the nitrogen-oxide-concentration signal downstream of the after-treatment line NOx_measd, and the reference function $NOx_{FR}(t)$. The latter proves to be an extremely reliable estimator of the level of ammonia that may be present as a slip downstream of the after-treatment line.

The next Figure 8B shows graphically the different processing stages of the signal $NOx_{FR}(t)$ represented schematically in Figure 7A. Highlighted in the central section of each graph is the difference of amplitude of the two filtered signals (LP/HP and HP/LP): whereas it is negligible in the case of absence of ammonia downstream of the after-treatment line (left-hand section of Figure 7B), it becomes appreciable in the case of an ammonia slip (right-hand section of Figure 7B), whence the different values of the ratio R.

The person skilled in the art will hence appreciate the great effectiveness of the method according to the invention obtained with a negligible economic and computational cost. By avoiding recourse to algorithms of implementation of the Fourier transform having a high computational load, it is possible to implement the method via the normal equipment present on board standard-production vehicles, and there likewise ceases the need to extend the sensor equipment of the vehicle, given that data are used coming from sensors that are in any case installed on board after-treatment lines with SCR elements. By means of these sensors, a virtual exhaust-ammonia sensor is in effect provided, without any need for installation of a real sensor. Furthermore, the amount of ammonia at the exhaust possibly determined by means of the method according to the invention may be used for correction of the parameters of the predictive models of calculation of the accumulation of ammonia in the SCR elements of the after-treatment line AFT.

Of course, the details of construction and the embodiments may vary widely with respect to what has been described and illustrated herein, without thereby departing from the scope of the present invention, as defined by the annexed claims.

**Claims**

1. A method for detecting the occurrence of ammonia slips downstream of an exhaust-gas after-treatment line (AFT) comprising at least one selective-catalytic-reduction nitrogen-oxide treatment element (SCRoF, SCRuF), wherein the after-treatment line comprises a first nitrogen-oxide-concentration sensor (S1) upstream of said at least one selective-catalytic-reduction nitrogen-oxide treatment element (SCRoF, SCRuF), and a second nitrogen-oxide-concentration sensor (S2) downstream of said at least one selective-catalytic-reduction nitrogen-oxide treatment element (SCRoF, SCRuF), the method comprising:

   - determining a reference function ($NOx_{FR}(t)$) that defines a relation between a temporal nitrogen-oxide-concentration signal ($NOx_{DSmeasd}(t)$) coming from said second nitrogen-oxide-concentration sensor (S2) and a temporal nitrogen-oxide-concentration signal ($NOx_{USmeasd}(t)$) coming from said first nitrogen-oxide-concentration sensor (S1);

- subjecting said reference function ($NOx_{FR}(t)$) to a first filtering (LP1, HP1) to obtain a first temporal signal ($Nox_{FR\ Fild}$ LP/HP) representative of a component of said reference function having a first frequency range (LF);

- subjecting said reference function ($NOx_{FR}(t)$) to a second filtering (HP2, LP2) to obtain a second temporal signal ($Nox_{FR\ Fild}$ HP/LP) representative of a component of said reference function ($Nox_{FR}(t)$), which has a second frequency range (HF), said second frequency range (HF) having values higher than said first frequency range (LF);

- calculating an amplitude ratio (R) between said first temporal signal ($NOx_{FR\ Fild}$ LP/HP) and said second temporal signal ($NOx_{FR\ Fild}$ HP/LP) ; and

- comparing said amplitude ratio (R) with a threshold value (C).

wherein, when said amplitude ratio (R) is higher than said threshold value (C), an ammonia slip downstream of said after-treatment line occurs.

2. The method according to Claim 1, wherein, named

$NOx_{DSmeasd}(t)$ : the temporal nitrogen-oxide-concentration signal detected by said second sensor (S2);
$NOx_{USmeasd}(t)$ : the temporal nitrogen-oxide-concentration signal detected by said first sensor (S1); and
K: calibration coefficient,
the reference function is expressed as follows:

$$NOx_{FR}(t) = [NOx_{Dsmeasd}(t) - K \cdot NOx_{USmeasd}(t)]/NOx_{DSmeasd}(t)$$

3. The method according to Claim 2, wherein said calibration coefficient (K) is constant.

4. The method according to Claim 2, wherein said calibration coefficient (K) is variable.

5. The method according to Claim 1, wherein said first filtering is a sequence of filtering sequence comprising a first low-pass filter (LP1) and a first high-pass filter (HP1).

6. The method according to Claim 1 or Claim 5, wherein said second filtering is a second filtering sequence comprising a second high-pass filter (HP2) and a second low-pass filter (LP2).

7. The method according to Claim 5, wherein said first low-pass filter (LP1) has a cut-off frequency comprised between 0.01 Hz and 0.05 Hz, and said first high-pass filter (HP1) has a cut-off frequency comprised between 0 Hz and 0.01 Hz.

8. The method according to Claim 6, wherein said second low-pass filter (LP2) has a cut-off frequency comprised between 1 Hz and 0.4 Hz, and said second high-pass filter (HP2) has a cut-off frequency comprised between 0.1 Hz and 0.5 Hz.

9. The method according to Claim 5, further comprising estimating an amount of ammonia downstream of the after-treatment line by means of the following relation:

$$NH3 = X\_LP(t) \cdot NOx_{DSmeasd}(t)$$

where:

NH3 is the ammonia concentration, preferably expressed in ppm; and
X_LP(t) is a value of amplitude of the transfer function ($NOx_{FR}(t)$) downstream of a processing via said first low-pass filter (LP1).

10. The method according to Claim 1, further comprising respecting the condition whereby the amplitude ratio (R) is higher than said threshold value (C) for a pre-set number of processing cycles in order to ascertain the presence of an ammonia slip downstream of said after-treatment line.

11. The method according to Claim 10, further comprising, upon occurrence of a transition of the amplitude ratio (R) to values lower than said threshold value, waiting a hysteresis time ($t_R$) to confirm the absence of ammonia slips downstream of said after-treatment line.

12. The method according to Claim 11, wherein said hysteresis time ($t_R$) has a duration different from a time interval during which said pre-set number of processing cycles develop.

13. The method according to Claim 5, further comprising a first saturation stage (SAT1) downstream of said first low-pass filter (LP1), said first saturation stage being configured for assigning the value 0 to the signal processed by said first low-pass filter (LP1) when it has an amplitude lower than 0, and the value 1 when it has an amplitude higher than or equal to 1.

14. The method according to Claim 5, further comprising a second saturation stage (SAT2) downstream of said second high-pass filter (HP2), said second saturation stage being configured for assigning the value 0 to the signal processed by said second high-pass filter (HP2) when it has an amplitude lower than 0, and the value 1 when it has an amplitude higher than or equal to 1.

**Patentansprüche**

1. Verfahren zum Erkennen des Auftretens von Ammoniakschlupf stromabwärts einer Abgasnachbehandlungsstrecke (AFT), umfassend mindestens ein Behandlungselement für die selektiv katalytische Reduktion von Stickstoffoxiden (SCRoF, SCRuF), wobei die Nachbehandlungsstrecke einen ersten Stickstoffoxidkonzentrationssensor (S1) stromaufwärts des mindestens einen Behandlungselements für die selektiv katalytische Reduktion von Stickstoffoxiden (SCRoF, SCRuF) und einen zweiten Stickstoffoxidkonzentrationssensor (S2) stromabwärts des mindestens einen Behandlungselements für die selektiv katalytische Reduktion von Stickstoffoxiden (SCRoF, SCRuF) umfasst, wobei das Verfahren umfasst:

    - Bestimmen einer Referenzfunktion ($NOx_{FR}(t)$), die eine Beziehung zwischen einem temporalen Stickstoffoxidkonzentrationssignal ($NOx_{DSmeasd}(t)$), das von dem zweiten Stickstoffoxidkonzentrationssensor (S2) kommt, und einem temporalen Stickstoffoxidkonzentrationssignal ($NOx_{USmeasd}(t)$) definiert, das von dem ersten Stickstoffoxidkonzentrationssensor (S1) kommt;
    - Unterziehen der Referenzfunktion ($NOx_{FR}(t)$) einer ersten Filterung (LP1, HP1), um ein erstes temporales Signal ($Nox_{FR\ Fild}\ LP/HP$) zu erhalten, das für eine Komponente der Referenzfunktion mit einem ersten Frequenzbereich (LF) repräsentativ ist;
    - Unterziehen der Referenzfunktion ($NOx_{FR}(t)$) einer zweiten Filterung (HP2, LP2), um ein zweites temporales Signal ($Nox_{FR\ Fild}\ HP/LP$) zu erhalten, das für eine Komponente der Referenzfunktion ($Nox_{FR}(t)$) repräsentativ ist, die einen zweiten Frequenzbereich (HF) aufweist, wobei der zweite Frequenzbereich (HF) höhere Werte als der erste Frequenzbereich (LF) hat;
    - Berechnen eines Amplitudenverhältnisses (R) zwischen dem ersten temporalen Signal ($Nox_{FR\ Fild}\ LP/HP$) und dem zweiten temporalen Signal ($Nox_{FR\ Fild}\ HP/LP$); und
    - Vergleichen des Amplitudenverhältnisses (R) mit einem Schwellenwert (C),

wobei, wenn das Amplitudenverhältnis (R) höher als der Schwellenwert (C) ist, ein Ammoniakschlupf stromabwärts der Nachbehandlungsstrecke auftritt.

2. Verfahren nach Anspruch 1, wobei, wenn gilt:

    $NOx_{DSmeasd}(t)$: ist das temporale Stickstoffoxidkonzentrationssignal, das von dem zweiten Sensor (S2) erfasst wird;
    $NOx_{USmeasd}(t)$: ist das temporale Stickstoffoxidkonzentrationssignal, das von dem ersten Sensor (S1) erfasst wird; und
    K: ist der Kalibrationskoeffizient,
    die Referenzfunktion wie folgt ausgedrückt wird:

$$NOx_{FR}(t) = [NOx_{Dsmeasd}(t) - K \cdot NOx_{USmeasd}(t)] / NOx_{DSmeasd}(t).$$

3. Verfahren nach Anspruch 2, wobei der Kalibrationskoeffizient (K) konstant ist.

4. Verfahren nach Anspruch 2, wobei der Kalibrationskoeffizient (K) variabel ist.

5. Verfahren nach Anspruch 1, wobei die erste Filterung eine Filtersequenz ist, die ein erstes Tiefpassfilter (LP1) und ein erstes Hochpassfilter (HP1) umfasst.

6. Verfahren nach Anspruch 1 oder Anspruch 5, wobei die zweite Filterung eine zweite Filtersequenz ist, die ein zweites Hochpassfilter (HP2) und ein zweites Tiefpassfilter (LP2) umfasst.

7. Verfahren nach Anspruch 5, wobei das erste Tiefpassfilter (LP1) eine Grenzfrequenz zwischen 0,01 Hz und 0,05 Hz aufweist und das erste Hochpassfilter (HP1) eine Grenzfrequenz zwischen 0 Hz und 0,01 Hz aufweist.

8. Verfahren nach Anspruch 6, wobei das zweite Tiefpassfilter (LP2) eine Grenzfrequenz zwischen 1 Hz und 0,4 Hz aufweist und das zweite Hochpassfilter (HP2) eine Grenzfrequenz zwischen 0,1 Hz und 0,5 Hz aufweist.

9. Verfahren nach Anspruch 5, ferner umfassend das Schätzen einer Ammoniakmenge stromabwärts der Nachbehandlungsstrecke mithilfe der folgenden Beziehung:

$$NH3 = X\_LP\,(t) \bullet NOx_{DSmeasd}\,(t)$$

wobei gilt:

NH3 ist die Ammoniakkonzentration, vorzugsweise ausgedrückt in ppm; und
X_LP(t) ist ein Amplitudenwert der Übertragungsfunktion ($NOx_{FR}$(t)) stromabwärts einer Verarbeitung durch das erste Tiefpassfilter (LP1).

10. Verfahren nach Anspruch 1, das ferner das Berücksichtigen der Bedingung umfasst, dass das Amplitudenverhältnis (R) für eine voreingestellte Anzahl von Verarbeitungszyklen höher als der Schwellenwert (C) ist, um das Vorliegen von Ammoniakschlupf stromabwärts der Nachbehandlungsstrecke festzustellen.

11. Verfahren nach Anspruch 10, das ferner nach dem Auftreten eines Übergangs des Amplitudenverhältnisses (R) zu Werten unterhalb des Schwellenwerts das Abwarten einer Hysteresezeit ($t_R$) umfasst, um die Abwesenheit von Ammoniakschlupf stromabwärts der Nachbehandlungsstrecke zu bestätigen.

12. Verfahren nach Anspruch 11, wobei die Hysteresezeit ($t_R$) eine Dauer hat, die verschieden von einem Zeitintervall ist, während dem die voreingestellte Anzahl von Verarbeitungszyklen abläuft.

13. Verfahren nach Anspruch 5, ferner umfassend eine erste Sättigungsstufe (SAT1) stromabwärts des ersten Tiefpassfilters (LP1), wobei die erste Sättigungsstufe dazu eingerichtet ist, dem von dem ersten Tiefpassfilter (LP1) verarbeiteten Signal den Wert 0 zuzuweisen, wenn es eine Amplitude kleiner 0 aufweist, und den Wert 1, wenn es eine Amplitude größer oder gleich 1 aufweist.

14. Verfahren nach Anspruch 5, ferner umfassend eine zweite Sättigungsstufe (SAT2) stromabwärts des zweiten Hochpassfilters (HP2), wobei die zweite Sättigungsstufe dazu eingerichtet ist, dem von dem zweiten Hochpassfilter (HP2) verarbeiteten Signal den Wert 0 zuzuweisen, wenn es eine Amplitude kleiner 0 aufweist, und den Wert 1, wenn es eine Amplitude größer oder gleich 1 aufweist.

**Revendications**

1. Procédé de détection de l'occurrence de fuites d'ammoniac en aval d'une ligne de post-traitement des gaz d'échappement (AFT) comprenant au moins un élément de traitement d'oxyde d'azote par réduction catalytique sélective (SCRoF, SCRuF), dans lequel la ligne de post-traitement comprend un premier capteur de concentration d'oxyde d'azote (S1) en amont dudit au moins un élément de traitement d'oxyde d'azote par réduction catalytique sélective (SCRoF, SCRuF), et un second capteur de concentration d'oxyde d'azote (S2) en aval dudit au moins un élément de traitement d'oxyde d'azote par réduction catalytique sélective (SCRoF, SCRuF), le procédé comprenant :

- la détermination d'une fonction de référence (NOx$_{FR}$(t)) qui définit une relation entre un signal temporel de concentration d'oxyde d'azote (NOx$_{DSmeasd}$(t)) provenant dudit second capteur de concentration d'oxyde d'azote (S2) et un signal temporel de concentration d'oxyde d'azote (NOx$_{USmeasd}$(t)) provenant dudit premier capteur de concentration d'oxyde d'azote (S1) ;
- la soumission de ladite fonction de référence (NOx$_{FR}$(t)) à un premier filtrage (LP1, HP1) pour obtenir un premier signal temporel (Nox$_{FR\ Fild}$ LP/HP) représentatif d'une composante de ladite fonction de référence ayant une première plage de fréquences (LF) ;
- la soumission de ladite fonction de référence (NOx$_{FR}$(t)) à un second filtrage (HP2, LP2) pour obtenir un second signal temporel (Nox$_{FR\ Fild}$ HP/LP) représentatif d'une composante de ladite fonction de référence (NOx$_{FR}$(t)), qui a une seconde plage de fréquences (HF), ladite seconde plage de fréquences (HF) ayant des valeurs supérieures à ladite première plage de fréquences (LF) ;
- le calcul d'un rapport d'amplitude (R) entre ledit premier signal temporel (Nox$_{FR\ Fild}$ LP/HP) et ledit second signal temporel (Nox$_{FR\ Fild}$ HP/LP) ; et
- la comparaison dudit rapport d'amplitude (R) avec une valeur seuil (C).

dans lequel, lorsque ledit rapport d'amplitude (R) est supérieur à ladite valeur seuil (C), une fuite d'ammoniac en aval de ladite ligne de post-traitement se produit.

2. Procédé selon la revendication 1, dans lequel, en désignant

NOx$_{DSmeasd}$(t) : le signal temporel de concentration d'oxyde d'azote détecté par ledit second capteur (S2) ;
NOx$_{USmeasd}$(t) : le signal temporel de concentration d'oxyde d'azote détecté par ledit premier capteur (S1) ; et
K : le coefficient d'étalonnage,
la fonction de référence est exprimée comme suit :

$$NOx_{FR}(t) = [NOx_{DSmeasd}(t) - K \cdot NOx_{USmeasd}(t)] / NOx_{DSmeasd}(t)$$

3. Procédé selon la revendication 2, dans lequel ledit coefficient d'étalonnage (K) est constant.

4. Procédé selon la revendication 2, dans lequel ledit coefficient d'étalonnage (K) est variable.

5. Procédé selon la revendication 1, dans lequel ledit premier filtrage est une séquence de filtrage comprenant un premier filtre passe-bas (LP1) et un premier filtre passe-haut (HP1).

6. Procédé selon la revendication 1 ou 5, dans lequel ledit second filtrage est une seconde séquence de filtrage comprenant un second filtre passe-haut (HP2) et un second filtre passe-bas (LP2).

7. Procédé selon la revendication 5, dans lequel ledit premier filtre passe-bas (LP1) a une fréquence de coupure comprise entre 0,01 Hz et 0,05 Hz, et ledit premier filtre passe-haut (HP1) a une fréquence de coupure comprise entre 0 Hz et 0,01 Hz.

8. Procédé selon la revendication 6, dans lequel ledit second filtre passe-bas (LP2) a une fréquence de coupure comprise entre 1 Hz et 0,4 Hz, et ledit second filtre passe-haut (HP2) a une fréquence de coupure comprise entre 0,1 Hz et 0,5 Hz.

9. Procédé selon la revendication 5, comprenant en outre l'estimation d'une quantité d'ammoniac en aval de la ligne de post-traitement au moyen de la relation suivante :

$$NH3 = X\_LP(t) \cdot NOx_{DSmeasd}(t)$$

où :

NH3 est la concentration d'ammoniac, exprimée de préférence en ppm ; et
X_LP(t) est une valeur d'amplitude de la fonction de transfert (NOx$_{FR}$(t)) en aval d'un traitement via ledit premier filtre passe-bas (LP1).

**10.** Procédé selon la revendication 1, comprenant en outre le respect de la condition selon laquelle le rapport d'amplitude (R) est supérieur à ladite valeur seuil (C) pour un nombre prédéfini de cycles de traitement afin de vérifier la présence d'une fuite d'ammoniac en aval de ladite ligne de post-traitement.

**11.** Procédé selon la revendication 10, comprenant en outre, lors de l'occurrence d'une transition du rapport d'amplitude (R) vers des valeurs inférieures à ladite valeur seuil, l'attente pendant un temps d'hystérésis ($t_R$) pour confirmer l'absence de fuites d'ammoniac en aval de ladite ligne de post-traitement.

**12.** Procédé selon la revendication 11, dans lequel ledit temps d'hystérésis ($t_R$) a une durée différente d'un intervalle de temps pendant lequel ledit nombre prédéfini de cycles de traitement se développe.

**13.** Procédé selon la revendication 5, comprenant en outre un premier étage de saturation (SAT1) en aval dudit premier filtre passe-bas (LP1), ledit premier étage de saturation étant configuré pour attribuer la valeur 0 au signal traité par ledit premier filtre passe-bas (LP1) lorsqu'il a une amplitude inférieure à 0, et la valeur 1 lorsqu'il a une amplitude supérieure ou égale à 1.

**14.** Procédé selon la revendication 5, comprenant en outre un second étage de saturation (SAT2) en aval dudit second filtre passe-haut (HP2), ledit second étage de saturation étant configuré pour attribuer la valeur 0 au signal traité par ledit second filtre passe-haut (HP2) lorsqu'il a une amplitude inférieure à 0, et la valeur 1 lorsqu'il a une amplitude supérieure ou égale à 1.

FIG. 1

S1

UI

AFT

SCRoF

SCRuF

S2

EP 3 892 838 B1

# FIG. 2A

Frequency [Hz]

# FIG. 2B

Frequency [Hz]

EP 3 892 838 B1

# FIG. 3A

[1]

HF

LF

Frequency [Hz]

LF/HF < C → **NO** NH$_3$ slip

# FIG. 3B

[2]

LF

HF

Frequency [Hz]

LF/HF > C → NH$_3$ slip

EP 3 892 838 B1

FIG. 4A

FIG. 4B

FIG. 4C

FIG. 4D

# FIG. 5A

NOx_DS_meas

NOx_DS_est

EP 3 892 838 B1

# FIG. 5B

# FIG. 5C

# FIG. 6

# FIG. 7

FIG. 8A

FIG. 8B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102009058089 A1
- US 2015218991 A1
- DE 102007044611 A1
- US 2019162094 A1